# EUROPEAN PATENT APPLICATION

(11) **EP 4 832 300 A1**
(43) Date of publication of application: **28.10.2026**
(21) Application number: 25204178.5
(22) Date of filing: 24.09.2025
(51) Int. Cl.: H02J 7/44, H02J 7/60

(54) **BATTERY PACK**

(30) Priority: 25.04.2025 CN 202510533616
(71) Applicant: Nanjing Chervon Industry Co., Ltd., Nanjing, Jiangsu 211106 (CN)
(72) Inventor: YANG, Dezhong, Nanjing (CN); LI, Ju, Nanjing (CN); XIAO, Yiwen, Nanjing (CN); GENG, Zheng, Nanjing (CN); GAO, Qing, Nanjing (CN)
(74) Representative: Sun, Yiming

(57) **Abstract**

A battery pack includes: a housing; a battery module disposed in the housing and including multiple cells; and battery terminals including at least a positive terminal, a negative terminal, and a communication terminal and configured to electrically connect the battery pack to an external electrical device. A discharge electronic switch is connected at least between a positive electrode of the battery module and the positive terminal to control the on and off of a discharging circuit. The battery pack further includes: a parameter detection module configured to detect electrical parameters of the battery terminals; and a controller configured to control a switching state of the discharge electronic switch based on the electrical parameters. In this manner, at least the safety of the battery pack for a power tool can be enhanced.

## Description

This application claims priority to Chinese Patent Application No. 202510533616.3 filed with the China National Intellectual Property Administration (CNIPA) on Apr. 25, 2025, the disclosure of which is incorporated herein by reference in its entirety.

### TECHNICAL FIELD

The present application relates to the technical field of power tools, for example, a battery pack.

### BACKGROUND

Thanks to the development of the related art, currently, handheld tools such as a chainsaw, a string trimmer, a circular saw, and a blower, table tools such as a miter saw and a metal cutter, and wheeled tools such as a snow thrower, a riding mower, a robotic mower, and an all-terrain vehicle can all be powered by lithium batteries. One critical concern in the use of lithium batteries lies in safety, with power-off protection being a key aspect of the safety issue.

This part provides background information related to the present application, and the background information is not necessarily the existing art.

### SUMMARY

An object of the present application is to solve or at least alleviate part or all of the preceding problems. Therefore, the present application provides a battery pack. To achieve the preceding object, the present application adopts the technical solutions below.

A battery pack includes: a housing; a battery module disposed in the housing and including multiple cells; and battery terminals including at least a positive terminal, a negative terminal, and a communication terminal and configured to electrically connect the battery pack to an external electrical device. A discharge electronic switch is connected at least between a positive electrode of the battery module and the positive terminal to control the on and off of a discharging circuit. The battery pack further includes: a parameter detection module configured to detect electrical parameters of the battery terminals; and a controller configured to control a switching state of the discharge electronic switch based on the electrical parameters.

In some examples, the battery pack further includes a temperature sampling module configured to acquire at least the temperature near the battery terminals, where the controller is configured to control the switching state of the discharge electronic switch in conjunction with the electrical parameters and the temperature.

In some examples, the electrical parameters include one or more of the following parameters: the voltage, the current, the resistance, and the conductance of the communication terminal and the capacitance, the dielectric constant, the conductance, and the resistance of the positive terminal and/or the negative terminal.

In some examples, the controller is configured to control the discharge electronic switch to be turned off to cut off the discharging circuit when the electrical parameters are not within the preset value ranges.

In some examples, the controller is further configured to, in response to a manual restart operation, control the discharge electronic switch to be turned on to restore the discharging circuit; and/or periodically detect whether the current electrical parameters allow the discharging circuit to be restored and, in the case where the current electrical parameters allow the discharging circuit to be restored, control the discharge electronic switch to be turned on.

In some examples, a charge electronic switch is further connected between the positive electrode of the battery module and the positive terminal to control the on and off of a charging circuit.

In some examples, a charge electronic switch is further connected between a negative electrode of the battery module and the negative terminal to control the on and off of a charging circuit.

In some examples, the battery terminals further include an additional detection terminal, and the detection terminal is not electrically connected to the external electrical device.

In some examples, the position arrangement of one or more or one or more pairs of detection terminals includes at least one of the following cases: being disposed in an accommodation space inside the housing; being at least partially exposed to the external environment relative to the housing or at least part of an outer surface being exposed to the external environment relative to the housing; and being embedded in the housing.

In some examples, the detection terminal is at least partially in contact with the external environment outside the housing of the battery pack.

In some examples, the detection terminal is at least partially not in direct contact with the external environment outside the housing of the battery pack.

In some examples, the electrical parameters include one or more of the voltage, the current, the resistance, the conductance, the capacitance, and the dielectric constant of the detection terminal.

In some examples, the discharge electronic switch and/or a charge electronic switch are power electronic switches each with a bidirectional shutdown feature.

In some examples, the battery pack further includes a heat sink configured to dissipate heat for the discharge electronic switch and/or a charge electronic switch, where the thermal conductivity of the heat sink is greater than or equal to 0.5 W/(m·K).

In some examples, the battery pack is provided with a port for both charging and discharging.

A battery pack includes: a housing; a battery module disposed in the housing and including multiple cells; battery terminals including at least a positive terminal, a negative terminal, and a communication terminal and configured to electrically connect the battery pack to an external electrical device; and a control circuit board and an electronic switch disposed on the control circuit board, where the electronic switch is connected between a positive electrode of the battery module and the positive terminal, and/or the electronic switch is connected between a negative electrode of the battery module and the negative terminal; and the electronic switch has a bidirectional shutdown feature.

In some examples, the electronic switch is configured to be a power electronic switch without a parasitic body diode.

A battery pack includes: a housing; a battery module disposed in the housing and including multiple cells; battery terminals including at least a positive terminal, a negative terminal, and a communication terminal and configured to electrically connect the battery pack to an external electrical device, where a positive electrical transmission section of the battery pack is disposed between a positive electrode of the battery module and the positive terminal; a negative electrical transmission section of the battery pack is disposed between a negative electrode of the battery module and the negative terminal; and electronic switches for controlling the charging and discharging of the battery pack are connected to the positive electrical transmission section and the negative electrical transmission section, respectively; and a heat sink configured to dissipate heat for the electronic switches, where the thermal conductivity of the heat sink is greater than or equal to 0.5 W/(m·K).

In some examples, a heat sink and a corresponding electronic switch are disposed on two opposite surfaces of a control circuit board, respectively.

In some examples, the heat sink and the corresponding electronic switch are disposed on the same surface of the control circuit board, and the heat sink is disposed above the electronic switch.

In some examples, the heat sink is made of at least one of thermally conductive plastic, thermally conductive metal, and composite thermally conductive material.

In some examples, the electronic switches each have a bidirectional shutdown feature.

A battery pack includes: a housing; a battery module disposed in the housing and including multiple cells; battery terminals including at least a positive terminal, a negative terminal, and a communication terminal and configured to electrically connect the battery pack to an external electrical device; a charge electronic switch connected between a positive electrode of the battery module and the positive terminal to control the on and off of a charging circuit; and a discharge electronic switch connected between a negative electrode of the battery module and the negative terminal to control the on and off of a discharging circuit.

In some examples, the charge electronic switch and/or the discharge electronic switch are configured to be power electronic switches each with a bidirectional shutdown feature.

In some examples, the charge electronic switch and/or the discharge electronic switch are configured to be power electronic switches without a parasitic body diode.

In some examples, the battery pack further includes a heat sink configured to dissipate heat for the charge electronic switch and/or the discharge electronic switch, where the thermal conductivity of the heat sink is greater than or equal to 0.5 W/(m·K).

In some examples, a heat sink and a corresponding charge electronic switch or a corresponding discharge electronic switch are disposed on two opposite surfaces of a control circuit board, respectively.

In some examples, the heat sink and the corresponding charge electronic switch or the corresponding discharge electronic switch are disposed on the same surface of the control circuit board, and the heat sink is disposed above the electronic switch.

In some examples, the battery pack further includes: a parameter detection module configured to detect electrical parameters of the battery terminals; and a controller configured to control the switching states of the charge electronic switch and/or the discharge electronic switch based on the electrical parameters.

In some examples, the battery pack further includes a temperature sampling module configured to acquire at least the temperature near the battery terminals, where the controller is configured to control the switching states of the charge electronic switch and/or the discharge electronic switch in conjunction with the electrical parameters and the temperature.

In some examples, the electrical parameters include one or more of the following parameters: the voltage, the current, the resistance, and the conductance of the communication terminal and the capacitance, the dielectric constant, the conductance, and the resistance of the positive terminal and/or the negative terminal.

In some examples, the controller is configured to control the discharge electronic switch and/or the charge electronic switch to be turned off to cut off the discharging circuit and/or the charging circuit in the case where the electrical parameters are not within the preset value ranges.

A battery pack includes: a housing; a battery module disposed in the housing and including multiple cells; battery terminals including at least a positive terminal, a negative terminal, and a communication terminal and configured to electrically connect the battery pack to an external electrical device; a charge electronic switch connected between a negative electrode of the battery module and the negative terminal to control the on and off of a charging circuit; and a discharge electronic switch connected between a positive electrode of the battery module and the positive terminal to control the on and off of a discharging circuit.

### BRIEF DESCRIPTION OF DRAWINGS

FIG. 1 is a schematic view illustrating a scenario of a battery pack and external electrical devices such as power tools and a charger to which the battery pack is adapted as an example of the present application.

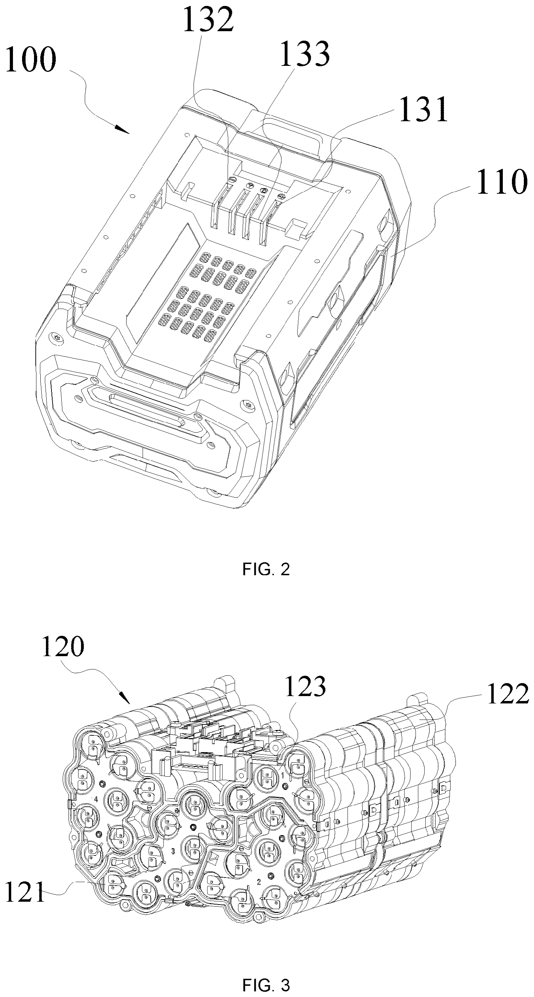

FIG. 2 is a perspective view of a battery pack as an example of the present application.
FIG. 3 is a perspective view of a battery module in the battery pack shown in FIG. 2.
FIG. 4 is a circuit schematic diagram of a battery pack as an example of the present application.
FIG. 5 is a schematic diagram of a power electronic switch with a parasitic body diode as an example of the present application.
FIG. 6 is a side view of an electronic switch and a heat sink that are on a control circuit board as an example of the present application.
FIG. 7 is a side view of an electronic switch and a heat sink that are on a control circuit board as another example of the present application.
FIG. 8 is a circuit schematic diagram illustrating that an electronic switch with a bidirectional shutdown feature is connected between a positive electrode of a module and a positive terminal in a battery pack as an example of the present application.
FIG. 9 is a circuit schematic diagram illustrating that an electronic switch with a bidirectional shutdown feature is connected between a negative electrode of a module and a negative terminal in a battery pack as an example of the present application.
FIG. 10 is a circuit schematic diagram illustrating that a charge electronic switch is connected between a positive electrode of a module and a positive terminal and a discharge electronic switch is connected between a negative electrode of the module and a negative terminal in a battery pack as an example of the present application.
FIG. 11 is a circuit schematic diagram illustrating that a discharge electronic switch is connected between a positive electrode of a module and a positive terminal and a charge electronic switch is connected between a negative electrode of the module and a negative terminal in a battery pack as an example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, Aand/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

Thanks to the development of the related art, the promotion of environmental protection concepts, and policy support, the scale of the power tool industry is continuously expanded. Moreover, after progressing through the stages in which power tools are operated manually, powered through fuel, and powered through alternating currents, the entire field shows a development trend toward lithium electrification and intelligence. Currently, various power tools, including handheld tools, table tools, and outdoor power devices such as a snow thrower and a mower, can use battery packs (mainly lithium battery packs) to achieve energy supply. One core concern of the battery power supply is safety, with power-off protection being a key aspect of the safety issue.

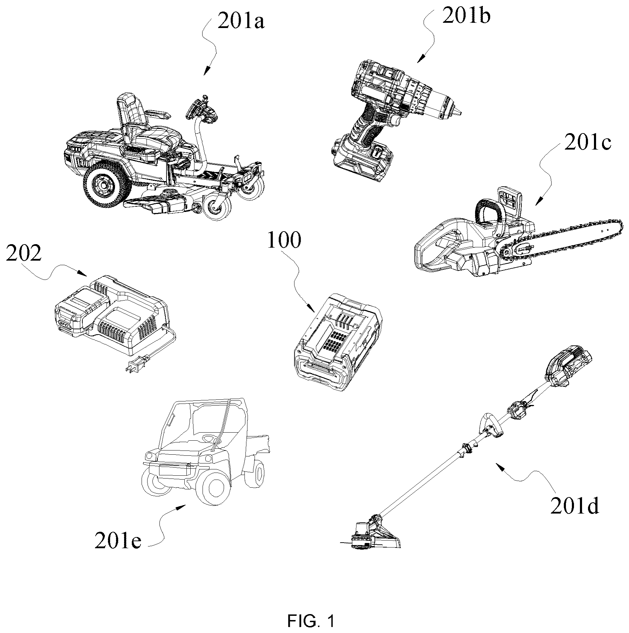

First, power tools 201 to which a battery pack 100 in the present application is adapted are introduced and described and include power tools 201 of different categories and power tools 201 of the same category but different models. For example, the power tools 201 include, but are not limited to, a riding mower 201a, an electric drill 201b, a chainsaw 201c, a string trimmer 201d, a blower, and an all-terrain vehicle 201e shown in FIG. 1. In some examples, the power tools 201 to which the battery pack 100 is adapted may include handheld tools such as a hedge trimmer and an electric circular saw. In some examples, the power tools 201 to which the battery pack 100 is adapted may include table tools such as a miter saw and a metal cutter. In some examples, the power tools 201 to which the battery pack 100 is adapted may include riding tools and/or push tools, for example, a riding mower, a stand-on mower, and a push snow thrower. In some examples, the power tools 201 to which the battery pack 100 is adapted may include outdoor wheeled tools, for example, a multi-purpose garden tool and an outdoor electric vehicle (an all-terrain vehicle) such as a farmer's vehicle or a golf cart. In some examples, the power tools 201 to which the battery pack 100 is adapted may include robotic tools such as a robotic mower and a robotic snow thrower. Alternatively, in some examples, the preceding power tool 201 may be a garden tool, such as a hedge trimmer, a blower, a string trimmer, or a mower. In some examples, the preceding power tool 201 may be a decorating tool, including a screwdriver, a nail gun, a glue gun, a sander, or the like. In some examples, the preceding power tool 201 may be a cutting tool, including a jigsaw, a chainsaw, a reciprocating saw, an electric circular saw, or the like. In some examples, the preceding power tool 201 may be a fastening tool, including a screwdriver, an electric hammer, an electric drill, or the like. In some examples, the preceding power tool 201 may be a sanding tool, including an angle grinder, a sander, or the like. In some examples, the preceding power tool 201 may be another tool, such as an electric lamp, a fan, or the like. It is to be understood that, without conflicting with the specific solutions, more types of power tools 201 to which the battery pack 100 in the present application is adapted that have not been shown above may exist.

Based on the above, the power tools 201 and the battery pack 100 may be used in a variety of different working conditions, and humid environments such as rain, snow, and accumulated water cannot be ruled out. Even though some battery packs 100 are provided with certain sealing protection structures, the interfaces/terminals for coupling with the power tools 201, a charger 202, or other external electrical devices are still inevitably exposed. In the preceding humid environments, accumulated water or water vapor shortens the creepage distance of the interfaces/terminals of the battery pack 100 for the power tool and components such as cells 121 in the battery pack 100, thereby increasing the risk of electrical leakage. Furthermore, this may lead to corrosion or carbonization of energized connectors such as interfaces/terminals and lithium dendrite growth within the cells 121, not only reducing the service life of the battery pack 100 but also potentially causing hazards such as short circuits and fire. In view of this, in an optional example of the present application, a battery pack 100 for the power tool is provided to solve the preceding problems such as water immersion. In this manner, the relevant situation can be determined and then corresponding protection measures are performed to optimize the safety and service life of the battery pack 100.

The battery pack 100 for the power tool may include at least a housing 110, a battery module 120, and battery terminals 130. The housing 110 forms the appearance of the battery pack 100, and an accommodation space is formed inside the housing 110. The battery module 120 is accommodated in the accommodation space. The battery terminals 130 may be disposed on the housing 110, penetrate the housing 110 to be electrically connected to the battery module 120, and at least partially exposed to the outside relative to the housing 110 to be coupled to an external electrical device. Other components such as a parameter detection module 142 and a controller 141 described later may also be accommodated, supported, and limited by the housing 110.

The battery pack 100 uses the battery module 120 in the housing 110 to store electrical energy. The battery module 120 may include multiple cells 121 that may be connected in series, in parallel, or in a combination of series and parallel. For example, n cells 121 are connected in series to form a cell group (referred to as 1P), and m cell groups are connected in parallel to form the battery module 120, where n and m are positive integers. It is to be noted that no matter how the multiple cells 121 are connected in series, in parallel, or in series and parallel, the cells 121 eventually have a total positive electrode and a total negative electrode as unified connection points of the battery module 120 formed by the multiple cells 121 with an electrical connection relationship for interfacing with the outside. A positive electrode 120a of the battery module 120 is electrically connected to a positive terminal 131 to be described later, and a negative electrode 120b of the battery module 120 is electrically connected to a negative terminal 132 to be described later. In some examples, the preceding cells 121 may be cylindrical cells 121. In some other examples, the preceding cells 121 may be pouch cells 121. In some other examples, the preceding cells 121 may be prismatic cells 121. In some examples, the preceding cells 121 may be multi-tab cells 121 or full-tab cells 121. In some examples, the preceding cells 121 may be lithium-ion cells, for example, including ternary lithium cells 121, lithium iron phosphate cells 121, and the like. Alternatively, the preceding cells 121 may also be other cells 121, for example, including nickel-metal hydride cells, lead-acid cells, and the like. In some examples, the battery module 120 further includes a cell holder 122 for supporting and limiting the multiple cells 121. For example, the cell holder 122 may be made of modified plastic or the like. Preferably, the material of the cell holder 122 may have a high thermal conductivity. In some examples, the battery module 120 further includes cell connectors 123 for achieving the series connection, parallel connection, or series-parallel connection among the multiple cells 121. For example, the cell connectors 123 may be made of copper, aluminum, nickel, or alloys or composite materials thereof. In some examples, positive and negative electrode lines (pole pieces) are further disposed between the battery module 120 and the battery terminals 130 and include a positive electrode line (pole piece) between the positive electrode 120a of the module and the positive terminal 131 and a negative electrode line (pole piece) between the negative electrode 120b of the module and the negative terminal 132.

The battery module 120 is coupled to the external electrical device through the battery terminals 130 on the housing 110 so that the power supply between the battery module 120 and the external electrical device can be achieved. The battery terminals 130 may include at least the positive terminal 131 and the negative terminal 132 for transmitting electrical energy and a communication terminal 133 for transmitting data. The battery terminals 130 are coupled to a tool terminal of the power tool 201, a charging terminal of the charger 202, or device terminals of other external electrical devices to perform charging and discharging, and the coupling between the terminals may be achieved by mechanical contact such as interface plug-in. For example, the preceding battery terminals 130 are disposed in a terminal block on the housing 110 of the battery pack 100. In some examples, a battery mounting portion for connecting the battery pack 100 is disposed on the housing 110 of the external electrical device such as the power tool 201 or the charger 202, and the battery mounting portion may be open or semi-open or may be a battery holder.

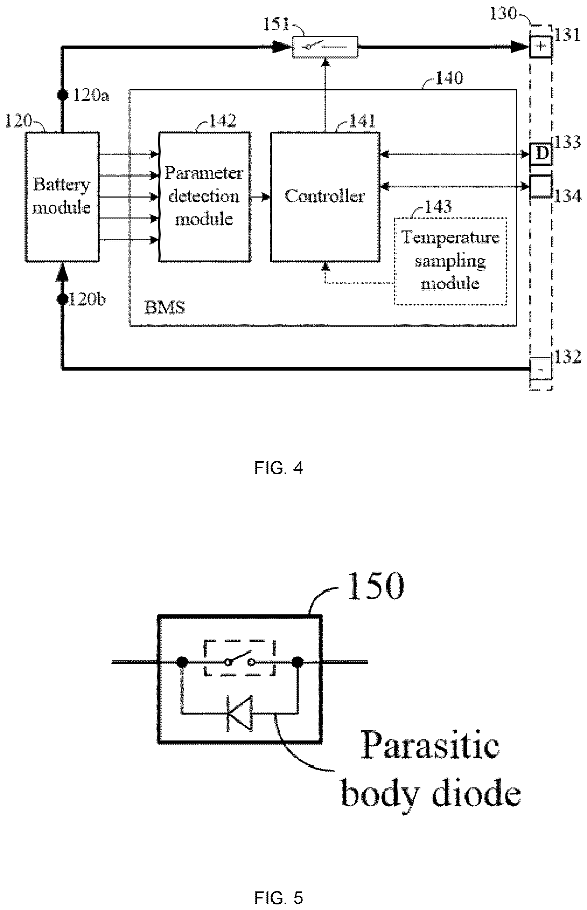

Referring to FIG. 4, to address and solve the water immersion safety problem of the battery pack 100, in the battery pack 100 for the power tool, a discharge electronic switch 151 for controlling the on and off of a discharging circuit 101 is electrically connected at least between the positive electrode 120a of the battery module 120 and the positive terminal 131. Moreover, the battery pack 100 further includes the parameter detection module 142 and the controller 141. The parameter detection module 142 can detect the electrical parameters of the preceding battery terminals 130, and the controller 141 can perform corresponding control on the switching state of the discharge electronic switch 151 based on the electrical parameters. Specifically, as shown in FIG. 4, the discharge electronic switch 151 is connected between the positive electrode 120a of the battery module 120 and the positive terminal 131. When the discharge electronic switch 151 is in an on state (different from an open circuit, which means that the switch is closed or turned on), the discharge current may flow from the positive electrode 120a of the battery module 120 to the positive terminal 131 so that the battery pack 100 can discharge electrical energy to the external electrical device. When the discharge electronic switch 151 is in an off state, the discharge current cannot flow from the positive electrode 120a of the battery module 120 to the positive terminal 131, and the discharging circuit 101 between the battery pack 100 and the external electrical device is cut off. The discharge electronic switch 151 is also connected to the controller 141, and the controller 141 is also connected to the parameter detection module 142. The controller 141 receives the electrical parameters of the battery terminals 130 currently measured by the parameter detection module 142, determines whether the battery pack 100 is submerged in water based on the electrical parameters, and transmits a corresponding signal to the discharge electronic switch 151 based on the determination result to control the discharge electronic switch 151 to be in a corresponding on or off state. For example, when it is determined that no water immersion occurs, a high-level signal may be transmitted to the discharge electronic switch 151 to control the discharge electronic switch 151 to be in the on state, thereby enabling the discharging circuit 101 between the battery pack 100 and the external electrical device to be turned on. When it is determined that water immersion occurs, a low-level signal may be transmitted to the discharge electronic switch 151 to control the discharge electronic switch 151 to be in the off state, thereby enabling the discharging circuit 101 between the battery pack 100 and the external electrical device to be turned off.

This example endows the battery pack 100 with the autonomous authority to independently decide whether to discharge electrical energy externally. Compared with some solutions in which only the external electrical device such as the power tool 201 determines whether the battery pack 100 needs to discharge electrical energy, this example allows the discharging circuit 101 and/or a charging circuit 102 to be smoothly cut off in the event of an abnormality in the external electrical device. Secondly, the discharge electronic switch 151 between the positive electrode 120a of the module and the positive terminal 131 controls the on and off. Compared with some solutions in which the electrical energy transmission path between the negative electrode 120b of the module and the negative terminal 132 is turned on or cut off, this example can avoid the creepage and leakage problem between the positive terminal 131 and the communication terminal 133 (since the communication terminal 133 is still a lower voltage end to which the current can flow compared to the positive terminal 131). Crucially, the battery pack 100 for the power tool in this example makes an intelligent determination and performs real-time control on whether the current battery pack 100 has the risk of water immersion based on the real-time measured electrical parameters such as the voltage, the conductance, and the capacitance of the battery terminals 130, thereby effectively avoiding safety risks such as short circuits and fire, which is conducive to improving the service life of the battery pack 100 and ensuring that the battery pack 100 can be safely used in conjunction with the power tool 201 in various working conditions/environments.

In some examples, the controller 141 determines whether the battery pack 100 is submerged in water based on whether the electrical parameters of the battery terminals 130 are abnormal. For example, the controller 141 may determine whether the currently measured electrical parameters of the battery terminals 130 exceed corresponding thresholds or determine whether the currently measured electrical parameters of the battery terminals 130 are within corresponding value ranges (of course, exceeding the threshold means not being within the preset value range). If the measured value exceeds the threshold or is not within the value range, it may be determined that the battery pack 100 has a safety hazard such as water immersion, and a signal is outputted to turn off the discharge electronic switch 151 to cut off the discharging circuit 101. Otherwise, a signal is outputted to turn on the discharge electronic switch 151 to turn on the discharging circuit 101 or allow the discharging circuit 101 to be turned on. In some examples, the controller 141 makes a determination based on a single parameter and the threshold or value range of the parameter. In some other examples, the controller 141 makes determinations based on multiple parameters and the corresponding thresholds or value ranges and when any parameter is abnormal or the number of abnormal parameters exceeds the allowed number, controls the preceding electronic switch to be turned off. In some other examples, the controller 141 makes a more accurate determination based on the calculated values of multiple parameters and the thresholds or value ranges corresponding to the calculated values.

In some examples, the electrical parameters of the preceding battery terminals 130 include one or more of the following parameters: the voltage, the current, and the resistance/conductance of the communication terminal 133 and the capacitance/dielectric constant and the conductance/resistance of the positive terminal 131 and/or the negative terminal 132. For example, the voltage value on the communication terminal 133 has a specification (logic level standard) under normal circumstances, such as GND (0 V), 3.3 V, or 5 V. When the terminal touches water, the voltage value at the terminal may present a value that does not correspond to the preceding specification, for example, a low level exceeding 0.3 * VDD or a high level lower than 0.7 * VDD. For example, when the terminal touches water, the resistance may drop below a lower threshold. For example, when the positive terminal 131 or the negative terminal 132 touches water, the dielectric constant or capacitance of the positive terminal 131 or the negative terminal 132 may rise beyond a threshold. Of course, in addition to the preceding electrical parameters, other electrical parameters of the terminals that may change due to contact with the fluid may also be applied in this example.

In some examples, in addition to the positive terminal 131, the negative terminal 132, and the communication terminal 133, the battery terminals 130 of the battery pack 100 may further include other terminals. For example, a detection terminal (detection electrode) 134 may be provided. For example, one detection terminal 134 or a pair of detection terminals 134 (some electrical parameters may be acquired from a pair of terminals) may be provided. Alternatively, multiple detection terminals 134 or multiple pairs of detection terminals 134 may be provided. In some examples, the preceding detection terminal 134 may be disposed in the accommodation space inside the housing 110 of the battery pack 100. For example, the detection terminal 134 is attached to the inner wall of the housing 110, for example, adjacent to the positive terminal 131, the negative terminal 132, or the communication terminal 133. In some other examples, the preceding detection terminal 134 may be embedded in the housing 110 of the battery pack 100, that is, integrated with the housing 110, and the direct physical contact between the detection terminal 134 and the external environment of the pack is not required. In some other examples, the preceding detection terminal 134 is at least partially exposed to the external environment relative to the housing 110 of the battery pack 100, or at least part of the outer surface of the preceding detection terminal 134 is exposed to the external environment relative to the housing 110 of the battery pack 100, thereby making contact with and sensing the external environment of the pack. It is to be understood that when the battery pack 100 is provided with multiple or multiple pairs of detection terminals 134, the positional relationship between the detection terminals 134 and the housing 110 may include at least one of the preceding three positional relationships, that is, some detection terminals 134 may be disposed in the pack, and/or some detection terminals 134 may be embedded in the housing, and/or some detection terminals 134 may penetrate the housing. Specifically, when the battery pack 100 is connected to the external electrical device (mounted to the power tool 201, the charger 202, or the like), the detection terminal 134 is not coupled and electrically connected to other terminals (the tool terminal, the charging terminal, or the like), but is electrically connected to the controller 141. The controller 141 can switch the switching state of the electronic switch 150 described above and below based on the electrical parameter of the detection terminal 134 to control the on and off of the discharging circuit 101 and/or the charging circuit 102, thereby ensuring the smooth implementation of the relevant solutions without interfering with the positive terminal 131, the negative terminal 132, and the communication terminal 133. Moreover, the influence of power/data interaction on the detection and determination in the preceding solutions can be avoided. In some examples, the preceding electrical parameters may include at least one of the current, the voltage, the resistance/conductance, and the capacitance/dielectric constant of the detection terminal 134.

In some examples, when the controller 141 makes a determination based on the electrical parameters of the battery terminals 130 and the thresholds or value ranges, the determination logic or the parameter types involved remain unchanged at different temperatures, different working modes, or different working stages, but the corresponding thresholds or values ranges used may be different to optimize the accuracy of this solution in determining related safety issues. In some examples, the battery pack 100 further includes a temperature sampling module 143 configured to acquire at least the temperature near the battery terminals 130. It is not excluded that the temperature sampling module 143 acquires temperatures at multiple points to comprehensively estimate the temperature at the battery terminals 130. The controller 141 determines whether the battery pack 100 is submerged in water in conjunction with the temperature currently measured by the temperature sampling module 143 and the electrical parameters of the battery terminals 130 currently measured by the parameter detection module 142 and performs temperature compensation with the measured temperature during the calculation, comparison, and determination processes. For example, the preceding temperature sampling module 143 may include a thermistor. In some other examples, the communication terminal 133 may have different expected values in different working modes. In the working mode where the signal on the communication terminal 133 remains at a high level, the controller 141 may compare the measured terminal voltage value with a threshold or value range corresponding to the high level. In the working mode where the signal on the communication terminal 133 remains at a low level, the measured terminal voltage value may be compared with a threshold or value range corresponding to the low level. In the working mode in which the square wave data signal is transmitted on the communication terminal 133, the change state and the specific value of the measured terminal voltage value may be determined.

In some examples, the controller 141 executes the preceding detection and control solution when the battery pack 100 is not connected to the external electrical device or is not currently transmitting power or exchanging data with the external electrical device. Alternatively, the controller 141 may further execute the preceding detection and control solution when the battery pack 100 is connected to the external electrical device and is transmitting power and exchanging data with the external electrical device. In the two cases, the controller 141 may determine how to control the preceding discharge electronic switch 151 based on the electrical parameters of the battery terminals 130 to cut off the discharging circuit 101 when water immersion or the like occurs, and the thresholds or value ranges corresponding to the electrical parameters used by the controller 141 in the two cases may be different, thereby ensuring the accuracy of the relevant control and avoiding misjudgment.

In some examples, in the case where the controller 141 determines that the battery pack 100 is submerged in water and controls the discharge electronic switch 151 to be turned off to cut off the discharging circuit 101, the controller 141 controls the discharge electronic switch 151 to be turned on in response to a manual restart operation by the user to restore the discharging circuit 101. Alternatively, the controller 141 may perform the secondary detection and determination based on the current electrical parameters of the battery terminals 130 before or after the manual restoration of the discharging circuit 101. If there is still a risk of water immersion, the circuit may be kept cut off or may be cut off again. In some other examples, the controller 141 may periodically detect and determine whether the current electrical parameters of the battery terminals 130 allow the preceding discharging circuit 101 to be restored. The following may be included: trying to restore the discharging circuit 101 and then performing detection and determination; or directly performing detection and determination without restoring the circuit, and then controlling the discharge electronic switch 151 to be turned on when there is no risk in the current electrical parameters, thereby achieving automatic restoration of the discharging function of the battery pack 100.

In some examples, the discharge electronic switch 151 may be a power electronic switch 150 of any type, including a silicon transistor, a silicon carbide transistor, a gallium nitride transistor, a gallium arsenide transistor, and the like. In some examples, the preceding power electronic switch 150 may be a metal-oxide-semiconductor field-effect transistor (MOSFET), a junction field-effect transistor (JFET), an insulated-gate bipolar transistor (IGBT), a bipolar field-effect transistor (BiFET), or the like. In some examples, the preceding discharge electronic switch 151 may also include a relay, a thyristor, or the like.

In some examples, the preceding discharge electronic switch 151 may have a bidirectional shutdown feature. When the controller 141 outputs a shutdown signal, the preceding discharge electronic switch 151 can be used to cut off the current path in two directions. The concept explanation and solution description may be specifically described below.

In some examples, the preceding discharge electronic switch 151 is a power electronic switch 150 such as a transistor. In the case where it is determined that the battery pack 100 has no risk of water immersion, the controller 141 controls the discharge electronic switch 151 to be in a linear conduction state to enable the battery pack 100 to power on the external electrical device such as the power tool 201. In other words, in the initial stage when the battery pack 100 discharges electrical energy to the external electrical device in the case where no risk of water immersion exists, the controller 141 controls the power electronic switch 150 such as the transistor to operate in a linear region. The electronic switch is turned on, but the resistance (R_{ds}) at this time is greater than the resistance (Rₒₙ) in a fully-turned-on state. Therefore, the power-on current is limited, thereby avoiding or solving the issue of arcing during power-on. In some examples, the initial stage when the battery pack 100 powers on the external electrical device such as the power tool 201 may completely include the controller 141 controlling the power electronic switch 150 to transition from the linear conduction state to a full conduction state. In some examples, the controller 141 outputs a pulse-width modulation (PWM) wave with a gradually increasing duty cycle to the power electronic switch 150 (so that the power electronic switch 150 gradually transitions from the linear conduction state to the full conduction state) so that dv/dt or current in the circuit is not too high, not causing damage to the switch or other electronic components.

In some examples, a charge electronic switch 152 for controlling the on and off of the charging circuit 102 is further electrically connected between the positive electrode 120a of the battery module 120 and the positive terminal 131 in the preceding battery pack 100 for the power tool. Similarly, the charge electronic switch 152 is controlled by the signal outputted by the controller 141 to change the switching state to turn on or off the charging circuit 102. In some examples, the switching state of the discharge electronic switch 151 does not affect the charging circuit 102, and the switching state of the charge electronic switch 152 does not affect the discharging circuit 101. In some examples, during the discharging process, the charge electronic switch 152 is kept on (in the on state/closed/in the conduction state), and during the charging process, the discharge electronic switch 151 is kept on (in the on state/closed/in the conduction state). In some other examples, the charge electronic switch 152 for controlling the on and off of the charging circuit 102 is further electrically connected between the negative electrode 120b of the battery module 120 and the negative terminal 132 in the preceding battery pack 100 for the power tool.

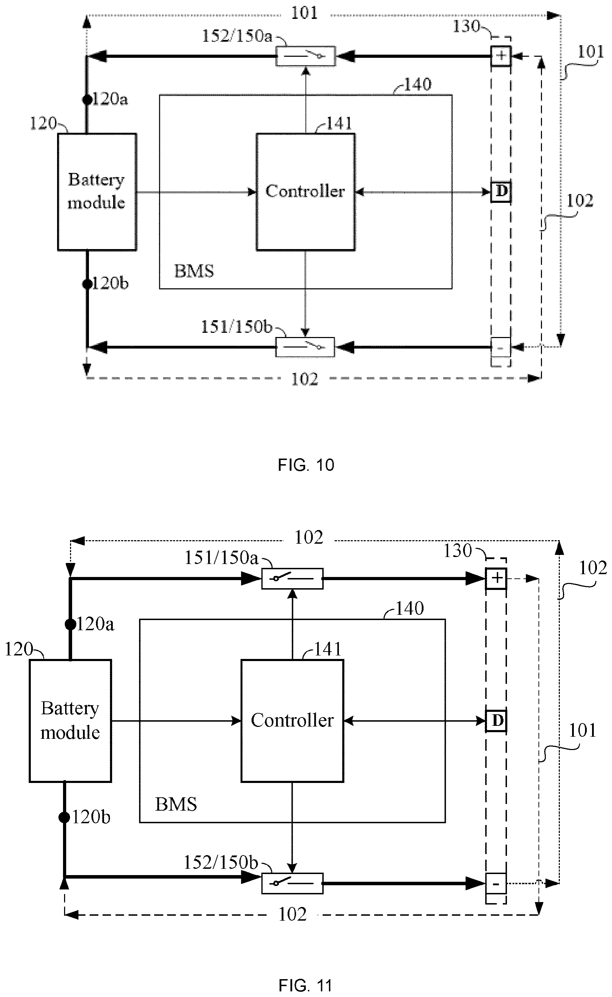

In an optional implementation manner, referring to FIG. 11, the battery pack 100 for the power tool includes the housing 110, the battery module 120, and the battery terminals 130. In addition, the discharge electronic switch 151 for controlling the on and off of the discharging circuit 101 is electrically connected between the positive electrode 120a of the battery module 120 and the positive terminal 131, and the charge electronic switch 152 for controlling the on and off of the charging circuit 102 is electrically connected between the negative electrode 120b of the battery module 120 and the negative terminal 132. In this implementation manner, the creepage and leakage problem due to water immersion during the discharging process of the battery pack 100 can be solved, and the charging protection functions such as overcharge protection can be implemented, thereby further enhancing the safety of the battery pack 100. The discharge electronic switch 151 and the charge electronic switch 152 are disposed on a positive electrical transmission section and a negative electrical transmission section, respectively in the case where the battery pack 100 is provided with a port for both charging and discharging so that the cost is reduced compared to some solutions using components such as three-terminal fuses, and safety, reliability, and flexible control can be achieved. In addition, the design of providing the electronic switches 150 at two ends is conducive to heat dissipation and temperature uniformity of the system. In some examples, the battery pack 100 for the power tool further includes the controller 141 and the parameter detection module 142. The parameter detection module 142 may detect the electrical parameters of the battery terminals 130 and transmit the electrical parameters to the controller 141. The controller 141 can switch the switching states of the discharge electronic switch 151 and/or the charge electronic switch 152 based on the currently measured electrical parameters of the battery terminals 130 to control the on and off of the discharging circuit 101 and/or the charging circuit 102 of the battery pack 100. In some examples, the preceding electrical parameters include, but are not limited to, one or more of the following parameters: the voltage, the current, and the resistance/conductance of the communication terminal 133; the conductance/resistance and the capacitance/dielectric constant of the positive terminal 131 and/or the negative terminal 132; and the current, the voltage, the resistance/conductance, and the capacitance/dielectric constant of the detection terminal 134. In some examples, the battery pack 100 further includes the temperature sampling module 143 that can acquire at least the temperature near the battery terminals 130 and transmit the temperature to the controller 141. The controller 141 decides how to control the switching states of the discharge electronic switch 151 and/or the charge electronic switch 152 in conjunction with the currently measured temperature and the electrical parameters of the battery terminals 130.

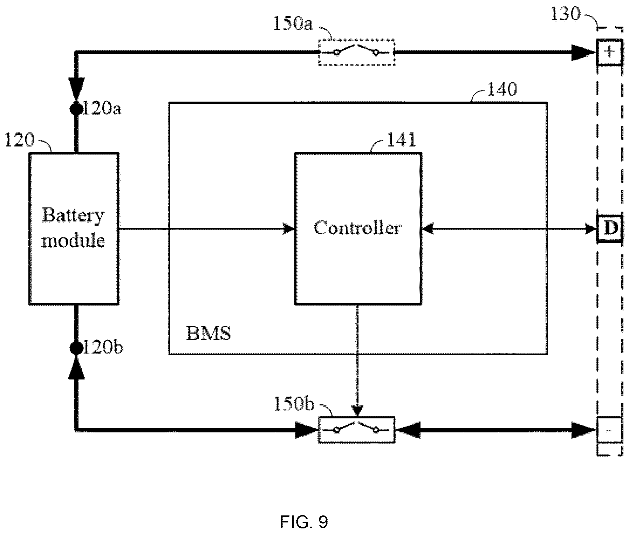

In an optional example of the present application, referring to FIGS. 5 to 9, in addition to the housing 110, the battery module 120, and the battery terminals 130, the battery pack 100 for the power tool further includes a control circuit board 140 and at least one electronic switch 150 disposed on the control circuit board 140 for controlling the on and off of the charging circuit 102 and/or the discharging circuit 101 of the battery pack 100. An electronic switch 150a is connected between the positive electrode 120a of the battery module 120 and the positive terminal 131, and/or an electronic switch 150b is connected between the negative electrode 120b of the battery module 120 and the negative terminal 132. Moreover, the electronic switches 150 each have a bidirectional shutdown feature. The bidirectional shutdown feature of the electronic switch 150 means that at least when the electronic switch 150 is in the off state, neither the forward current nor the reverse current can pass through the electronic switch 150. Specifically, when the electronic switches 150 connected between the positive electrode 120a of the module and the positive terminal 131 and/or connected between the negative electrode 120b of the module and the negative terminal 132 are in the off state in response to the signal of the controller 141, due to the bidirectional shutdown feature, the discharging circuit 101 in which the current flows out of the positive terminal 131 (flows into the negative terminal 132) can be cut off, and the charging circuit 102 in which the current flows into the positive terminal 131 (flows out of the negative terminal 132) can be cut off. Therefore, in this example, by using the special properties of some electronic switches 150, a single component can simultaneously perform the power-off protection for both charging and discharging, thereby saving space for the layout design on the control circuit board 140 and reducing component losses and system costs, or enhancing redundant protection to further improve the safety of the battery pack 100. It is to be understood that in this example, the traditional solution of using back-to-back MOSFETs (Si MOSFETs) is intended to be abandoned, and the inherent characteristics of some electronic switches 150 are expected to be used to solve the problem (the improvement of the circuit board layout, heat dissipation, losses, and costs as mentioned above). The preceding electronic switch 150 with a bidirectional shutdown feature may be a single element rather than a device, assembly, or sub-circuit formed by two or more elements.

In some examples, the electronic switch 150 with a bidirectional shutdown feature may be a power electronic switch 150 without a parasitic body diode. For example, the electronic switch 150 may use a GaN transistor (such as a GaN high-electron-mobility transistor (HEMT)), a JFET, or the like. However, the MOSFET shown in FIG. 5 which has only a unidirectional shutdown feature is not used. The MOSFET cannot cut off the reverse current (the current from right to left) due to the existence of the parasitic body diode in the MOSFET. For example, a symmetrical drain-source design may be made for the GaN HEMT, and when a shutdown signal (whose voltage is lower than both the voltages of the source and drain) is outputted to the gate, both forward and reverse currents between the drain and source are not allowed to pass. For example, when a shutdown signal (whose voltage exceeds the upper/lower cut-off voltage limit) is outputted to the gate of the JFET, both forward and reverse currents between the drain and source are not allowed to pass.

In some examples, the electronic switch 150 has both a bidirectional shutdown feature and a bidirectional conduction feature. Therefore, both the on and off of the discharging circuit 101 and the charging circuit 102 of the battery pack 100 can be controlled through the switching state of one electronic switch 150, thereby achieving technical effects such as reducing the number of components and reducing losses and costs. For example, the GaN HEMT using the preceding source-drain symmetric design is used as an example. When a turn-on signal (a signal whose voltage is higher than the voltage of the source or drain by a certain value) is outputted to the gate, both forward and reverse currents between the drain and source are allowed to pass. For example, the JFET may have a natural conduction path (channel) when no voltage is applied to the gate.

In some examples, the electronic switch 150 controls the on and off of the charging circuit 102 and the on and off of the discharging circuit 101 separately in response to different signals. Specifically, one electronic switch 150 can cut off the discharging circuit 101 in response to a first signal and cut off the charging circuit 102 in response to a second signal. Moreover, the electronic switch 150 can perform at least one of the following: allowing the discharging circuit 101 to be turned on in response to a third signal; and allowing the charging circuit 102 to be turned on in response to a fourth signal. In some examples, the first signal and the second signal may be the same signal, that is, the off state of the electronic switch 150 with a bidirectional shutdown feature may be triggered by the same signal. In some examples, the third signal and the fourth signal may be the same signal. In some other examples, the third signal and the fourth signal may be different signals, and the difference in the signals may include the difference in the value ranges of the signal voltage values.

In some examples, the control circuit board 140 is provided with the electronic switch 150a connected between the positive electrode of the battery module 120 and the positive terminal 131 and having a bidirectional shutdown feature and a bidirectional conduction feature. In some other examples, the control circuit board 140 is provided with the electronic switch 150b connected between the negative electrode of the battery module 120 and the negative terminal 132 and having a bidirectional shutdown feature and a bidirectional conduction feature.

In some examples, the control circuit board 140 is further provided with the controller 141 and the parameter detection module 142. The parameter detection module 142 may detect the electrical parameters of the battery terminals 130 and transmit the electrical parameters to the controller 141. The controller 141 can switch the switching state of the preceding electronic switch 150 based on the currently measured electrical parameters of the battery terminals 130 to control the on and off of the discharging circuit 101 and/or the charging circuit 102 of the battery pack 100. In some examples, the preceding electrical parameters include at least one of the current, the voltage, and the resistance/conductance of the communication terminal 133; the capacitance/dielectric constant and the conductance/resistance of the positive terminal 131 and/or the negative terminal 132; and the current, the voltage, and the resistance/conductance of the detection terminal 134. In some examples, the battery pack 100 is further provided with the temperature sampling module 143 that acquires at least the temperature near the battery terminals 130. The controller 141 decides how to control the preceding electronic switch 150 under temperature compensation in conjunction with the currently measured temperature and the electrical parameters of the battery terminals 130. In some examples, the controller 141 determines whether to turn off the electronic switch 150 based on whether the measured electrical parameters are within preset value ranges.

In some examples, the control circuit board 140 is further provided with a heat sink 160 for dissipating heat for the electronic switch 150, and the heat sink 160 and the electronic switch 150 may be disposed on two opposite surfaces of the control circuit board 140. Alternatively, the heat sink 160 and the electronic switch 150 may be disposed on the same surface of the control circuit board 140, and the heat sink 160 is disposed on the outer side of the electronic switch 150 to dissipate heat for the electronic switch 150. In some examples, the heat sink 160 of the preceding electronic switch 150 is made of a material with a high thermal conductivity, and the thermal conductivity may be greater than or equal to 0.5 W/(m·K). The concept explanation and solution description may be specifically described below.

In an optional implementation manner of the present application, the battery pack 100 for the power tool includes the housing 110, the battery module 120, and the battery terminals 130. The positive electrical transmission section of the battery pack 100 is between the positive electrode 120a of the battery module 120 and the positive terminal 131, and the negative electrical transmission section of the battery pack 100 is between the negative electrode 120b of the battery module 120 and the negative terminal 132. The positive electrical transmission section and the negative electrical transmission section are connected to the electronic switches 150, respectively to control the charging and discharging of the battery pack 100. Moreover, the battery pack 100 further includes heat sinks 160 for dissipating heat for the electronic switches 150, and the thermal conductivity of the heat sink 160 is greater than or equal to 0.5 W/(m·K). In this example, the electronic switches 150 are disposed in the positive electrical transmission section and the negative electrical transmission section of the battery pack 100, respectively and the heat sinks 160 with a thermal conductivity greater than or equal to 0.5 W/(m·K) are provided for the electronic switches 150, thereby enhancing the safety of the battery pack 100 for the power tool in terms of power-off protection and heat dissipation.

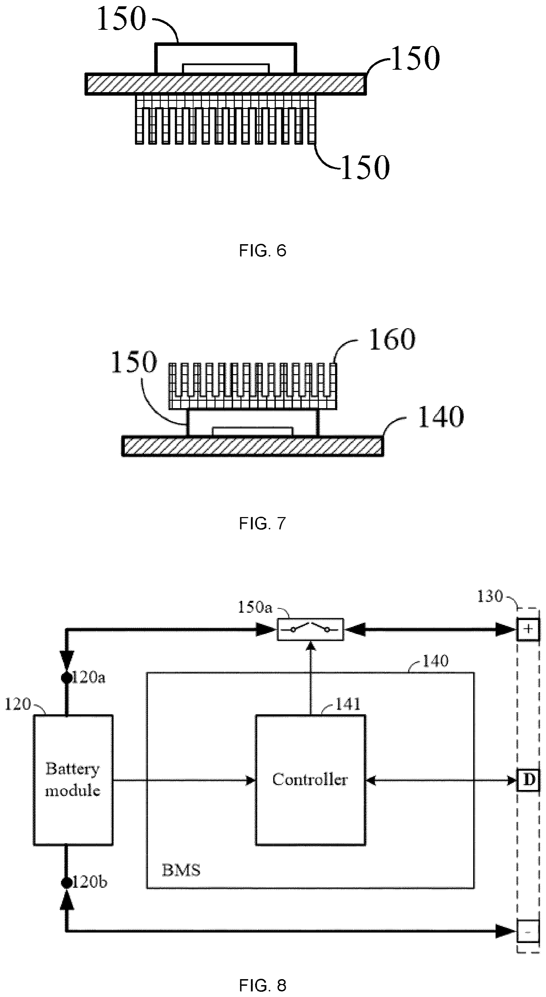

In some examples, the heat sinks 160 may be in one-to-one correspondence with the electronic switches 150, that is, one electronic switch 150 is provided with one heat sink 160. As shown in FIG. 6, in some examples, the heat sink 160 and the corresponding electronic switch 150 are disposed on two opposite surfaces of the control circuit board 140, respectively. For example, the electronic switch 150 and the heat sink are disposed on the upper surface and the lower surface of the board in the figure, respectively. As shown in FIG. 7, in some other examples, the heat sink 160 and the corresponding electronic switch 150 are disposed on the same surface of the control circuit board 140, and the heat sink 160 is disposed on a side of the electronic switch 150 facing away from the board, that is, the electronic switch 150 is between the control circuit board 140 and the heat sink. For example, in the figure, the electronic switch 150 is disposed on the upper surface of the board, and the heat sink 160 is disposed above the electronic switch 150. In some examples, along a direction perpendicular to the contact surface between the electronic switch 150 and the control circuit board 140, the orthographic projections of the heat sink 160 and the corresponding electronic switch 150 largely overlap to ensure heat dissipation efficiency.

In some examples, the preceding heat sink 160 with a thermal conductivity greater than or equal to 0.5 W/(m·K) may be made of at least one of thermally conductive plastic, thermally conductive metal, and composite thermally conductive material. In some examples, the heat sink 160 may be made of a nylon material with thermally conductive fillers. In some examples, the thermal conductivity of the heat sink 160 may be greater than or equal to 0.8 W/(m·K). Further, the thermal conductivity of the heat sink 160 may be greater than or equal to 1.0 W/(m·K). In some examples, the heat sink 160 is also flame resistant. In some examples, the heat sink 160 also has a certain degree of tensile strength and flexural strength.

It is to be noted that various implementation manners and specific examples described above, provided that the characteristics do not conflict, can be combined with each other to comprehensively optimize the safety of the battery pack for the power tool in the present application involving power-off protection, thermal management, and other aspects, as well as the related control accuracy, flexibility, and efficiency.

In an optional implementation manner of the present application, referring to FIG. 10, the battery pack 100 for the power tool includes the housing 110, the battery module 120, and the battery terminals 130. In addition, the charge electronic switch 152 for controlling the on and off of the charging circuit 102 is electrically connected between the positive electrode 120a of the battery module 120 and the positive terminal 131, and the discharge electronic switch 151 for controlling the on and off of the discharging circuit 101 is electrically connected between the negative electrode 120b of the battery module 120 and the negative terminal 132. This implementation manner can enhance the safety of the battery pack 100, and compared with the related art, this implementation manner is featured with lower costs, flexible control, and good heat dissipation performance. In some examples, the battery pack 100 for the power tool further includes the controller 141 and the parameter detection module 142. The parameter detection module 142 may detect the electrical parameters of the battery terminals 130 and transmit the electrical parameters to the controller 141. The controller 141 can switch the switching states of the discharge electronic switch 151 and/or the charge electronic switch 152 based on the currently measured electrical parameters of the battery terminals 130 to control the on and off of the discharging circuit 101 and/or the charging circuit 102 of the battery pack 100. For example, in the case where the controller 141 determines that the battery pack 100 is at risk of overcharging based on the preceding electrical parameters, the controller 141 may control the preceding charge electronic switch 152 to be in the off state, thereby cutting off the charging circuit 102 to achieve overcharge protection. For example, in the case where the controller 141 determines that the battery pack 100 is at risk of discharge overcurrent based on the preceding electrical parameters, the controller 141 may control the preceding discharge electronic switch 151 to be in the off state, thereby cutting off the discharging circuit 101 to achieve discharge overcurrent protection. In some examples, the preceding electrical parameters include, but are not limited to, one or more of the following parameters: the voltage, the current, and the resistance/conductance of the communication terminal 133; the conductance/resistance and the capacitance/dielectric constant of the positive terminal 131 and/or the negative terminal 132; and the current, the voltage, the resistance/conductance, and the capacitance/dielectric constant of the detection terminal 134. In some examples, the battery pack 100 further includes the temperature sampling module 143 that can acquire at least the temperature near the battery terminals 130 and transmit the temperature to the controller 141. The controller 141 decides how to control the switching states of the discharge electronic switch 151 and/or the charge electronic switch 152 in conjunction with the currently measured temperature and the electrical parameters. In some examples, the controller 141 is configured to correspondingly control the discharge electronic switch 151 and/or the charge electronic switch 152 to be turned off to cut off the discharging circuit 101 and/or the charging circuit 102 in the case where the currently measured electrical parameters of the battery terminals 130 are not within the preset value ranges.

In some examples, the discharge electronic switch 151 and/or the charge electronic switch 152 may be power electronic switches 150 each with a bidirectional conduction feature. The on and off of the current circuit can be controlled, and the reverse current can be allowed to pass. For example, the discharge electronic switch 151 and/or the charge electronic switch 152 may be power electronic switches 150 each with a parasitic body diode as shown in FIG. 5. During the charging process, due to the parasitic body diode, the discharge electronic switch 151 can allow a reverse current path without interfering with the functional implementation of the charge electronic switch 152. The switching state of the charge electronic switch 152 determines the on and off of the charging circuit 102. During the discharging process, due to the parasitic body diode, the charge electronic switch 152 can allow a reverse current path without interfering with the functional implementation of the discharge electronic switch 151. The switching state of the discharge electronic switch 151 determines the on and off of the discharging circuit 101. In some examples, the discharge electronic switch 151 and/or the charge electronic switch 152 may each have a bidirectional shutdown feature. Under normal working conditions, the discharge electronic switch 151 may be kept on during the charging process, and the charge electronic switch 152 may be kept on during the discharging process. When it is determined that the discharging circuit 101 or the charging circuit 102 needs to be cut off, at least one of the discharge electronic switch 151 and the charge electronic switch 152 can be turned off to cut off the discharging circuit 101 or the charging circuit 102. For example, the discharge electronic switch 151 and/or the charge electronic switch 152 may be GaN HEMT bidirectional switches, JFETs, or the like. For the explanation of this part, reference may be made to the relevant content above.

In some examples, the control circuit board 140 is disposed in the battery pack 100 for the power tool. The charge electronic switch 152 and/or the discharge electronic switch 151 are disposed on the control circuit board 140. Moreover, the heat sinks 160 corresponding to the electronic switches 150 are further disposed on the control circuit board 140 and can dissipate heat for the electronic switches 150. The thermal conductivity of the heat sink 160 is greater than or equal to 0.5 W/(m·K). In some examples, the positions of the electronic switches 150 are in one-to-one correspondence with the positions of the heat sinks 160. In some examples, the charge electronic switch 152 and the heat sink 160 are disposed on two opposite surfaces of the control circuit board 140, respectively, and/or the discharge electronic switch 151 and the heat sink 160 are disposed on two opposite surfaces of the control circuit board 140, respectively. In some examples, the charge electronic switch 152 and the heat sink 160 are disposed on the same surface of the control circuit board 140, and/or the discharge electronic switch 151 and the heat sink 160 are disposed on the same surface of the control circuit board 140; and the heat sink 160 is disposed on the outer side of the charge electronic switch 152, and/or the heat sink 160 is disposed on the outer side of the discharge electronic switch 151, thereby dissipating heat for the electronic switches 150.

The technical effects of the present application at least include improving the safety of the battery pack for the power tool. It is to be noted that various implementation manners and specific examples described above, provided that the characteristics do not conflict, can be combined with each other to comprehensively optimize the safety of the battery pack for the power tool in the present application involving power-off protection, thermal management, and other aspects, as well as the related control accuracy, flexibility, and efficiency.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A battery pack (100), comprising:
a housing (110);
a battery module (120) disposed in the housing and comprising a plurality of cells (121);
battery terminals (130) comprising at least a positive terminal (131), a negative terminal (132), and a communication terminal (133) and configured to electrically connect the battery pack to an external electrical device;
a discharge electronic switch (151) is connected between a positive electrode (120a) of the battery module and the positive terminal to control on and off of a discharging circuit (101);
a parameter detection module (142) detecting electrical parameters of the battery terminals; and
a controller (141)configured to control a switching state of the discharge electronic switch based on the electrical parameters.

2. The battery pack of claim 1, further comprising a temperature sampling module (143) configured to acquire temperature near the battery terminals, wherein the controller is configured to control the switching state of the discharge electronic switch in conjunction with the electrical parameters and the temperature.

3. The battery pack of claim 1, wherein the electrical parameters comprise one or more of the following parameters: a voltage, a current, a resistance, and a conductance of the communication terminal and a capacitance, a dielectric constant, a conductance, and a resistance of the positive terminal and/or the negative terminal.

4. The battery pack of claim 1, wherein the controller is configured to control the discharge electronic switch to be turned off to cut off the discharging circuit when the electrical parameters are not within preset value ranges.

5. The battery pack of claim 4, wherein the controller is further configured to, in response to a manual restart operation, control the discharge electronic switch to be turned on to restore the discharging circuit; and/or periodically detect whether current electrical parameters allow the discharging circuit to be restored and, in a case where the current electrical parameters allow the discharging circuit to be restored, control the discharge electronic switch to be turned on.

6. The battery pack of claim 1, wherein a charge electronic switch (152) is further connected between the positive electrode of the battery module and the positive terminal to control on and off of a charging circuit (102); or a charge electronic switch (152) is further connected between a negative electrode (120b) of the battery module and the negative terminal to control on and off of a charging circuit.

7. The battery pack of claim 1, wherein the battery terminals further comprise an additional detection terminal (134), and the detection terminal is not electrically connected to the external electrical device.

8. The battery pack of claim 7, wherein position arrangement of one or more or one or more pairs of detection terminals comprises at least one of the following cases: being disposed in an accommodation space inside the housing; being at least partially exposed to external environment relative to the housing or at least part of an outer surface being exposed to external environment relative to the housing; and being embedded in the housing.

9. The battery pack of claim 7, wherein the detection terminal is at least partially in contact with external environment outside the housing of the battery pack; and/or the detection terminal is at least partially not in direct contact with the external environment outside the housing of the battery pack.

10. The battery pack of claim 7, wherein the electrical parameters comprise one or more of a voltage, a current, a resistance, a conductance, a capacitance, and a dielectric constant of the detection terminal.

11. The battery pack of claim 1, wherein the discharge electronic switch is power electronic switches each with a bidirectional shutdown feature.

12. The battery pack of claim 1, further comprising a heat sink (160) configured to dissipate heat for the discharge electronic switch, wherein a thermal conductivity of the heat sink is greater than or equal to 0.5 W/(m·K).

13. The battery pack of claim 10, wherein a heat sink and a corresponding discharge electronic switch are disposed on two opposite surfaces of a control circuit board, respectively; and/or the heat sink and the corresponding discharge electronic switch are disposed on a same surface of the control circuit board, and the heat sink is disposed above the discharge electronic switch.

14. The battery pack of claim 1, wherein the controller is configured to control the discharge electronic switch to be in a linear conduction state to power on the external electrical device.

15. The battery pack of claim 1, wherein the battery pack is provided with a port for both charging and discharging.
